# EUROPEAN PATENT APPLICATION

(11) **EP 4 825 904 A1**
(43) Date of publication of application: **21.10.2026**
(21) Application number: 25170375.7
(22) Date of filing: 14.04.2025
(51) Int. Cl.: C08K 5/103, C08L 69/00, C08L 83/10

(54) **POLYCARBONATE COMPOSITIONS WITH IMPROVED CHEMICAL RESISTANCE**

(71) Applicant: SHPP Global Technologies B.V., 4612 PX Bergen op Zoom (NL)
(72) Inventor: Li, Yuntao, Mt. Vernon, 47620 (US)
(74) Representative: Modiano, Gabriella Diana

(57) **Abstract**

Aspects of the disclosure relate to thermoplastic compositions including: (a) from about 80 wt% to about 97 wt% of a polycarbonate homopolymer having a molecular weight of at least 31,500 as determined by gel permeation chromatography relative to linear bisphenol A polycarbonate standards; (b) from about 1 wt% to about 15 wt% of a first polycarbonate-siloxane copolymer having a siloxane content of from 35 wt% to 45 wt%; and (c) from about 0.2 wt% to about 2 wt% of a mold release component including at least two distinct mold release agents. The combined weight percent value of all components does not exceed 100 wt%, and all weight percent values are based on the total weight of the composition. The composition has good chemical resistance properties.

## Description

### FIELD OF THE DISCLOSURE

The present disclosure relates to polycarbonate compositions, and in particular to polycarbonate compositions having good chemical resistance that include a mold release component including at least two distinct mold release agents.

### BACKGROUND OF THE DISCLOSURE

Chemical resistance to sunscreen spray-and in particular to Banana Boat^{®} sunscreen-has been difficult to achieve for transparent polycarbonate compositions. Current practical solutions include using protective coatings on clear materials, or using clear polyester-type compositions. Use of protective coatings introduces a secondary operation during manufacturing which increases costs. Exemplary copolyester compositions are available from Eastman under the Tritan^{™} trade name, but they are known to be brittle and have limited processability. ELCRES^{™} polycarbonate copolymer resins are available from SABIC and are suitable for many applications that require low temperature ductility, easy processing, transparency, and some level of chemical resistance. Other conventional compositions include a combination of branched polycarbonate, transparent low-siloxane-content polycarbonate copolymer and translucent higher-siloxane-content polycarbonate copolymer; these compositions do not include mold release agents.

While many conventional compositions can offer some range of transparency and chemical resistance, none combine these properties with properties such as processability and practical impact strength. Such compositions could be useful in healthcare applications, consumer electronics and other application spaces.

These and other deficiencies are addressed by aspects of the present disclosure.

### SUMMARY

Aspects of the disclosure relate to thermoplastic compositions including: (a) from about 80 wt% to about 97 wt% of a polycarbonate homopolymer having a molecular weight of at least 31,500 as determined by gel permeation chromatography relative to linear bisphenol A polycarbonate standards; (b) from about 1 wt% to about 15 wt% of a first polycarbonate-siloxane copolymer having a siloxane content of from 35 wt% to 45 wt%; and (c) from about 0.2 wt% to about 2 wt% of a mold release component including at least two distinct mold release agents. The combined weight percent value of all components does not exceed 100 wt%, and all weight percent values are based on the total weight of the composition. The composition has good chemical resistance properties.

### DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate" includes mixtures of two or more polycarbonate polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "Mₙ" can be used interchangeably, and refer to the statistical average molecular weight of all the polymer chains in the sample and is defined by the formula: ${M}_{n} = \frac{\sum {N}_{i} {M}_{i}}{\sum {N}_{i}} ,$ where Mᵢ is the molecular weight of a chain and Nᵢ is the number of chains of that molecular weight. Mₙ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "weight average molecular weight" or "M_{w}" can be used interchangeably, and are defined by the formula: ${M}_{w} = \frac{\sum {N}_{i} {{M}_{i}}^{2}}{\sum {N}_{i} {M}_{i}} ,$ where Mᵢ is the molecular weight of a chain and Nᵢ is the number of chains of that molecular weight. Compared to Mₙ, M_{w} takes into account the molecular weight of a given chain in determining contributions to the molecular weight average. Thus, the greater the molecular weight of a given chain, the more the chain contributes to the M_{w}. M_{w} can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula: $PDI = \frac{{M}_{w}}{{M}_{n}} .$ The PDI has a value equal to or greater than 1, but as the polymer chains approach uniform chain length, the PDI approaches unity.

The terms "BisA," "BPA," or "bisphenol A," which can be used interchangeably, as used herein refers to a compound having a structure represented by the formula: 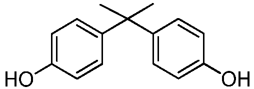 BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

Aspects of the disclosure related to thermoplastic compositions including: (a) from about 80 wt% to about 97 wt% of a polycarbonate homopolymer having a molecular weight of at least 31,500 as determined by gel permeation chromatography relative to linear bisphenol A polycarbonate standards; (b) from about 1 wt% to about 15 wt% of a first polycarbonate-siloxane copolymer having a siloxane content of from 35 wt% to 45 wt%; and (c) from about 0.2 wt% to about 2 wt% of a mold release component including at least two distinct mold release agents. The combined weight percent value of all components does not exceed 100 wt%, and all weight percent values are based on the total weight of the composition.

As used herein, polycarbonate refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates. As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates. The terms "residues" and "structural units", used in reference to the constituents of the polymers, are synonymous throughout the specification. In certain aspects the polycarbonate polymer is a Bisphenol-A polycarbonate. Polycarbonate may define any polycarbonate material or mixture of materials, for example, as recited in U.S. Patent No. 7,786,246, which is hereby incorporated in its entirety for the specific purpose of disclosing various polycarbonate compositions and methods. The term polycarbonate can be further defined as compositions having repeating structural units of the formula (1): 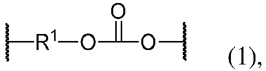
in which at least 60 percent of the total number of R¹ groups are aromatic organic radicals and the balance thereof are aliphatic, alicyclic, or aromatic radicals. In a further aspect, each R¹ is an aromatic organic radical and, more preferably, a radical of the formula (2):

   -A¹-Y¹-A²- (2),
wherein each of A¹ and A² is a monocyclic divalent aryl radical and Y¹ is a bridging radical having one or two atoms that separate A¹ from A². In various aspects, one atom separates A¹ from A². For example, radicals of this type include, but are not limited to, radicals such as -O-, -S-, -S(O) -, -S(O₂) -, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical Y¹ is preferably a hydrocarbon group or a saturated hydrocarbon group such as methylene, cyclohexylidene, or isopropylidene.

In various further aspects, "polycarbonates" and "polycarbonate resins" as used herein further defines homopolycarbonates (referred to herein as "polycarbonate homopolymers," having the same R¹), copolymers including different R¹ moieties in the carbonate (referred to herein as "copolycarbonates" or "polycarbonate copolymers"), copolymers including carbonate units and other types of polymer units, such as ester units, polysiloxane units, and combinations including at least one of polycarbonate homopolymers and polycarbonates copolymers. As used herein, "combination" is inclusive of blends, mixtures, alloys, reaction products, and the like. The disclosed composition may include a polycarbonate homopolymer.

The thermoplastic composition includes from about 80 wt% to about 97 wt% of the polycarbonate homopolymer. In further aspects the composition includes at least 80 wt%, or at least 81 wt%, or at least 82 wt%, or at least 83 wt%, or at least 84 wt%, or at least 85 wt%, or at least 86 wt%, or at least 87 wt%, or at least 88 wt%, or at least 89 wt%, or at least 90 wt%, or at least 91 wt%, or at least 92 wt%, or at least 93 wt%, or at least 94 wt%, or at least 95 wt%, or at least 96 wt%, or at most 97 wt%, or at most 96 wt%, or at most 95 wt%, or at most 94 wt%, or at most 93 wt%, or at most 92 wt%, or at most 91 wt%, or at most 90 wt%, or at most 89 wt%, or at most 88 wt%, or at most 87 wt%, or at most 86 wt%, or at most 85 wt%, of the polycarbonate homopolymer.

The polycarbonate homopolymer has a molecular weight of at least 31,500 as determined by gel permeation chromatography relative to linear bisphenol A polycarbonate standards. In further aspects the polycarbonate homopolymer has a molecular weight of at least 32,000, or at least 32,500, or at least 33,000, or at least 33,500, or at least 34,000, or at least 34,500, or at least 35,000, or at least 35,500, or at least 36,000, or at least 36,500, or at least 37,000, or at least 37,500, or at least 38,000, or at most 325,000, or at most 300,000, or at most 275,000, or at most 250,000, or at most 225,000, or at most 200,000, or at most 175,000, or at most 150,000, or at most 125,000, or at most 100,000, or at most 75,000, or at most 70,000, or at most 65,000, or at most 60,000, or at most 55,000, or at most 50,000, or at most 45,000, or at most 40,000, as determined by gel permeation chromatography relative to linear bisphenol A polycarbonate standards.

The polycarbonate homopolymer may include a linear polycarbonate homopolymer, a branched polycarbonate homopolymer, or a combination thereof.

In specific aspects the polycarbonate homopolymer includes a linear polycarbonate homopolymer having a molecular weight of from 35,000 to 38,000 as determined by gel permeation chromatography relative to linear bisphenol A polycarbonate standards.

In further aspects the polycarbonate homopolymer includes a branched polycarbonate homopolymer having a molecular weight of from 33,000 to 35,000 as determined by gel permeation chromatography relative to linear bisphenol A polycarbonate standards, and the branched polycarbonate homopolymer includes a 1,1,1-tris(4-hydroxyphenyl)ethane (THPE) branching agent.

In particular aspects the composition includes at least two distinct (different) polycarbonate homopolymers having a molecular weight of at least 31,500 as determined by gel permeation chromatography relative to linear bisphenol A polycarbonate standards.

The thermoplastic composition includes from about 1 wt% to about 15 wt% of a first polycarbonate-siloxane copolymer having a siloxane content of from 35 wt% to 45 wt%.

In some aspects the composition includes at least 1 wt%, or at least 1.5 wt%, or at least 2 wt%, or at least 2.5 wt%, or at least 3 wt%, or at most 15 wt%, or at most 14 wt%, or at most 13 wt%, or at most 12 wt%, or at most 11 wt%, or at most 10 wt%, or at most 9 wt%, or at most 8 wt%, or at most 7 wt%, or at most 6 wt%, or at most 5 wt%, or at most 4 wt%, or at most 3 wt%, of the first polycarbonate-siloxane copolymer having a siloxane content of from 35 wt% to 45 wt%.

In further aspects the first polycarbonate-siloxane copolymer has a siloxane content of from 38 wt% to 42 wt%, or 39 wt% to 41 wt%, or about 40 wt%. Suitable first polycarbonate-siloxane copolymers are available from SABIC.

In certain aspects the first polycarbonate-siloxane copolymer has a molecular weight of from 37,000 to 38,000 grams per mole as determined by gel permeation chromatography relative to linear bisphenol A polycarbonate standards.

In specific aspects the composition further includes from about 10 wt% to about 15 wt% of a second polycarbonate-siloxane copolymer having a siloxane content of from about 4 wt% to about 8 wt%. In particular aspects the composition includes at least 10 wt%, or at least 11 wt%, or at least 12 wt%, or at least 13 wt%, or at most 15 wt%, or at most 14 wt%, or at most 13 wt%, of the second polycarbonate-siloxane copolymer. In more specific aspects of the second polycarbonate-siloxane copolymer has a siloxane content of from about 5 wt% to about 7 wt%, or about 6 wt%. A suitable second polycarbonate-siloxane copolymer is transparent EXL (t-EXL) available from SABIC having a siloxane content of about 6 wt%.

The thermoplastic composition includes from about 0.2 wt% to about 2 wt% of a mold release component including at least two distinct mold release agents. In certain aspects the at least two mold release agents include a fatty acid ester and a hydrogenated polydene. In further aspects the at least two mold release agents are selected from the group consisting of: pentaerithritol tetrastearate (PETS); glycerol monostearate; glycerol tristearate; poly(alfa) olefin (PAO); poly(ethylene oxide-propylene oxide-ethylene oxide); and combinations thereof. In yet further aspects the at least two mold release agents include at least PETS and PAO.

In particular aspects the at least two mold release agents include a first mold release agent and a second mold release agent, and the first mold release agent and the second mold release agent are present in a weight percent ratio of from 1:10 to 10:1. In some aspects the first mold release agent and the second mold release agent are present in a weight percent ratio of 1:10, or 1:9, or 1:8, or 1:7, or 1:6, or 1:5, or 1:4, or 1:3, or 1:2, or 1:1, or 2:1, or 3:1, or 4:1, or 5:1, or 6:1, or 7:1, or 8:1, or 9:1, or 10:1, or any range between two of these ratios.

The composition includes from about 0.2 wt% to about 2 wt% of the mold release component. In some aspects the composition includes at least 0.2 wt%, or at least 0.3 wt%, or at least 0.4 wt%, or at least 0.5 wt%, or at least 0.6 wt%, or at least 0.7 wt%, or at least 0.8 wt%, or at least 0.9 wt%, or at least 1 wt%, or at most 2 wt%, or at least 1.9 wt%, or at least 1.8 wt%, or at least 1.7 wt%, or at least 1.6 wt%, or at least 1.5 wt%, or at least 1.4 wt%, or at least 1.3 wt%, or at least 1.2 wt%, or at least 1.1 wt%, or at least 1 wt%, or at least 0.9 wt%, or at least 0.8 wt%, or at least 0.7 wt%, or at least 0.6 wt%, of the mold release component.

The thermoplastic composition may include at least one additional additive in some aspects. The at least one additional additive may include, but is not limited to, an acid scavenger, an anti-drip agent, an antioxidant, an antistatic agent, a chain extender, a colorant, a flow promoter, a lubricant, a plasticizer, a quenching agent, a flame retardant, a UV reflecting additive, an impact modifier, a blowing agent, a reinforcing agent, or a combination thereof. The at least one additional additive may be present in the composition in an amount of from 0.01 wt% to about 10 wt% in some aspects. In further aspects the at least one additional additive is present in an amount of at least 0.01 wt%, or at least 0.02 wt%, or at least 0.03 wt%, or at least 0.04 wt%, or at least 0.05 wt%, or at least 0.06 wt%, or at least 0.07 wt%, or at least 0.08 wt%, or at most 10 wt%, or at most 9 wt%, or at most 8 wt%, or at most 7 wt%, or at most 6 wt%, or at most 5 wt%, or at most 4 wt%, or at most 3 wt%, or at most 2 wt%, or at most 1.5 wt%, or at most 1 wt%, or at most 0.9 wt%, or at most 0.8 wt%, or at most 0.7 wt%, or at most 0.6 wt%, or at most 0.5 wt%, or at most 0.4 wt%, or at most 0.3 wt%, or at most 0.2 wt%, or at most 0.1 wt%.

Compositions according to aspects of the disclosure have good chemical resistance properties as compared to conventional compositions that do not include the mold release component including at least two distinct mold release agents and/or that do not include from about 80 wt% to about 97 wt% of the polycarbonate homopolymer having a molecular weight of at least 31,500 as determined by gel permeation chromatography relative to linear bisphenol A polycarbonate standards.

In some aspects the composition has a compatible Environmental Stress Cracking Resistance (ESCR) rating as evaluated in accordance with ASTM D543. A "compatible" ESCR rating may be evaluated according to the standards provided in the ESCR Rating Criteria table in the Examples section. In certain aspects the ESCR rating is evaluated in accordance with ASTM D543 using sunscreen (e.g., Banana Boat^{®} sunscreen) at a temperature of 23 °C for 3 days under a 1% strain.

In certain aspects the composition has a tensile strength at yield (σ_{y}) retention or a tensile elongation at break (ε_{b}) retention of greater than 80%, as evaluated in accordance with ASTM D543. In further aspects the composition has σ_{y} retention or a ε_{b} retention of at least 81%, or at least 82%, or at least 83%, or at least 84%, or at least 85%, or at least 86%, or at least 87%, or at least 88%, or at least 89%, or at least 90%, or at least 91%, or at least 92%, or at least 93%, or at least 94%, or at least 95%, or at least 96%, or at least 97%, or at least 98%, or at least 99%, or at least 100%, or at most 150%, or at most 140%, or at most 130%, or at most 120%, or at most 110%, as evaluated in accordance with ASTM D543.

In further aspects the composition has a transmittance of greater than 60% or a haze of less than 40%, wherein transmittance and haze are evaluated in accordance with ASTM D1003 using a sample having a thickness of 2.5 millimeters (mm).

In specific aspects the composition has a transmittance of greater than 60%, or greater than 61%, or greater than 62%, or greater than 63%, or greater than 64%, or greater than 65%, or greater than 66%, or greater than 67%, or greater than 68%, or greater than 69%, or greater than 70%, or greater than 71%, or greater than 72%, or greater than 73%, or greater than 74%, or greater than 75%, or at most 100%, or at most 95%, or at most 90%, or at most 85%, or at most 80%, as evaluated in accordance with ASTM D1003 using a sample having a thickness of 2.5 mm.

In further aspects the composition has a haze of less than 40%, or less than 39%, or less than 38%, or less than 37%, or less than 36%, or less than 35%, or less than 34%, or less than 33%, or less than 32%, or less than 31%, or less than 30%, or less than 29%, or less than 28%, or less than 27%, or less than 26%, or less than 25%, or less than 24%, or at least 0%, or at least 5%, or at least 10%, or at least 15%, or at least 20% as evaluated in accordance with ASTM D1003 using a sample having a thickness of 2.5 mm.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, compression molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion formed. In a still further aspect, the article is injection molded. In specific aspects the article is a component of a medical device, a consumer electronics component, or an automotive component.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.

Aspect 1. A thermoplastic composition comprising:
a) from about 80 wt% to about 97 wt% of a polycarbonate homopolymer having a molecular weight of at least 31,500 as determined by gel permeation chromatography relative to linear bisphenol A polycarbonate standards;
b) from about 1 wt% to about 15 wt% of a first polycarbonate-siloxane copolymer having a siloxane content of from 35 wt% to 45 wt%; and
c) from about 0.2 wt% to about 2 wt% of a mold release component comprising at least two distinct mold release agents,
wherein the combined weight percent value of all components does not exceed 100 wt%, and all weight percent values are based on the total weight of the composition.

Aspect 2. The thermoplastic composition according to Aspect 1, wherein the polycarbonate homopolymer comprises a linear polycarbonate homopolymer, a branched polycarbonate homopolymer, or a combination thereof.

Aspect 3. The thermoplastic composition according to Aspect 2, wherein the polycarbonate homopolymer comprises a linear polycarbonate homopolymer having a molecular weight of from 35,000 to 38,000 as determined by gel permeation chromatography relative to linear bisphenol A polycarbonate standards.

Aspect 4. The thermoplastic composition according to Aspect 2 or 3, wherein the polycarbonate homopolymer comprises a branched polycarbonate homopolymer having a molecular weight of from 33,000 to 35,000 as determined by gel permeation chromatography relative to linear bisphenol A polycarbonate standards, wherein the branched polycarbonate homopolymer comprises a 1,1,1-tris(4-hydroxyphenyl)ethane (THPE) branching agent.

Aspect 5. The thermoplastic composition according to any one of Aspects 1 to 4, wherein the composition comprises at least two distinct polycarbonate homopolymers having a molecular weight of at least 31,500 as determined by gel permeation chromatography relative to linear bisphenol A polycarbonate standards.

Aspect 6. The thermoplastic composition according to any one of Aspects 1 to 5, wherein the composition further comprises from about 10 wt% to about 15 wt% of a second polycarbonate-siloxane copolymer having a siloxane content of from about 4 wt% to about 8 wt%.

Aspect 7. The thermoplastic composition according to any one of Aspects 1 to 6, wherein the first polycarbonate-siloxane copolymer has a molecular weight of from 37,000 to 38,000 grams per mole as determined by gel permeation chromatography relative to linear bisphenol A polycarbonate standards.

Aspect 8. The thermoplastic composition according to any one of Aspects 1 to 7, wherein the at least two mold release agents comprise a fatty acid ester and a hydrogenated polydene.

Aspect 9. The thermoplastic composition according to any one of Aspects 1 to 8, wherein the at least two mold release agents are selected from the group consisting of: pentaerithritol tetrastearate; glycerol monostearate; glycerol tristearate; poly(alfa) olefin; poly(ethylene oxide-propylene oxide-ethylene oxide); and combinations thereof.

Aspect 10. The thermoplastic composition according to Aspect 9, wherein the at least two mold release agents comprise at least pentaerithritol tetrastearate and poly(alfa) olefin.

Aspect 11. The thermoplastic composition according to any one of Aspects 1 to 10, wherein the at least two mold release agents comprise a first mold release agent and a second mold release agent, and the first mold release agent and the second mold release agent are present in a weight percent ratio of from 1:10 to 10:1.

Aspect 12. The thermoplastic composition according to any one of Aspects 1 to 11, wherein the composition comprises at least one additional additive.

Aspect 13. The thermoplastic composition according to Aspect 12, wherein the at least one additional additive comprises an acid scavenger, an anti-drip agent, an antioxidant, an antistatic agent, a chain extender, a colorant, a flow promoter, a lubricant, a plasticizer, a quenching agent, a flame retardant, a UV reflecting additive, an impact modifier, a blowing agent, a reinforcing agent, or a combination thereof.

Aspect 14. The thermoplastic composition according to any one of Aspects 1 to 13, wherein the composition has a compatible Environmental Stress Cracking Resistance (ESCR) rating as evaluated in accordance with ASTM D543.

Aspect 15. The thermoplastic composition according to Aspect 14, wherein the ESCR rating is evaluated in accordance with ASTM D543 using sunscreen at a temperature of 23 °C for 3 days under a 1% strain.

Aspect 16. The thermoplastic composition according to any one of Aspects 1 to 15, wherein the composition has a tensile strength at yield (σ_{y}) retention or a tensile elongation at break (ε_{b}) retention of greater than 80%, as evaluated in accordance with ASTM D543.

Aspect 17. The thermoplastic composition according to any one of Aspects 1 to 16, wherein the composition has a tensile strength at yield (σ_{y}) retention or a tensile elongation at break (ε_{b}) retention of at least 90%, as evaluated in accordance with ASTM D543.

Aspect 18. The thermoplastic composition according to any one of Aspects 1 to 17, wherein the composition has a transmittance of greater than 60% or a haze of less than 40%, wherein transmittance and haze are evaluated in accordance with ASTM D1003 using a sample having a thickness of 2.5 millimeters (mm).

Aspect 19. An article comprising the thermoplastic composition according to any one of Aspects 1 to 18.

Aspect 20. The article according to Aspect 19, wherein the article is a component of a medical device, a consumer electronics component, or an automotive component.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Compositions described herein included one or more of the components listed in Table 1:

**Table 1 - Components**

| **Component** | **Description** | **Source** |
|---|---|---|
| PC-1 | Linear bisphenol A polycarbonate, CAS Reg. No. 25971-63-5. having a molecular weight (Mw) of 20,000 - 22,000 grams per mole, as determined by gel permeation chromatography relative to linear bisphenol A polycarbonate standards, produced by interfacial polymerization and endcapped with p-cumylphenol | SABIC |
| PC-2 | Linear bisphenol A polycarbonate, CAS Reg. No. 25971-63-5, having a molecular weight (Mw) of 30,000 - 31,000 grams per mole, as determined by gel permeation chromatography relative to linear bisphenol A polycarbonate standards, produced by interfacial polymerization and endcapped with p-cumylphenol | SABIC |
| PC-3 | Linear bisphenol A polycarbonate, CAS Reg. No, 25971-63-5. having a molecular weight (Mw) of 35,000 - 38,000 grams per mole, as determined by gel permeation chromatography relative to linear bisphenol A polycarbonate standards, produced by interfacial polymerization and endcapped with p-cumylphenol | SABIC |
| B-PC | Branched bisphenol A homopolymer, containing 0.4 mol% 1,1,1-tris(4-hydroxyphenyl)ethane (THPE) branching agent, having a molecular weight (Mw) of 33,000-35,000 g/mol, as determined by gel permeation chromatography relative to linear bisphenol A polycarbonate standards, produced by interfacial polymerization and endcapped with p-cumylphenol | SABIC |
| PC-Si-1 | PDMS (polydimethylsiloxane)-Bisphenol A polycarbonate copolymer, 6 wt% siloxane, average PDMS block length 45 units (D45), Mw 20,000 to 24,000 g/mol as determined by GPC using polycarbonate standards, eugenol end-capped | SABIC |
| PC-Si-2 | Polycarbonate-siloxane copolymer having a siloxane content of 40 wt%, average PDMS block length of 45 units, having a Mw of 37,000 to 38,000 grams per mole as determined by gel permeation chromatography relative to linear bisphenol A polycarbonate standards produced by interfacial polymerization and endcapped with p-cumylphenol | SABIC |
| PETS | Pentaerythritol tetrastearate, CAS Reg. No 115-83-3 | FACI |
| PAO | Hydrogenated polydene, CAS Reg. No 68037-01-4, available as Durasyn^{®} 166 polyalphaolefins | INEOS |
| STAB | Phosphite Stabilizer, available as Irgaphos^{®} 168 | BASF |

Typical compounding procedures are described as follows: the various formulations were prepared by direct dry-blending of the raw materials and homogenized with a paint shaker prior to compounding. The formulations were compounded on a 26 mm Coperion ZSK co-rotating twin-screw extruder. A typical extrusion profile is listed in Table 2.

**Table 2 - Extrusion Conditions**

| **Parameter** | **Unit** | **Condition** |
|---|---|---|
| Feed temperature | °C | 177 |
| Zone 1 temperature | °C | 232 |
| Zones 2-8 temperature | °C | 266 |
| Die temperature | °C | 271 |
| Screw speed | rpm | 400 |
| Throughput | kg/h | 70 |
| Torque | % | 75-80 |

A DEMAG molding machine was used to mold the test parts for standard physical property testing; molding conditions are provided in Table 3:

**Table 3 - Molding Conditions**

| **Parameters** | **Unit** | **Condition** |
|---|---|---|
| Pre-drying time | h | 4 |
| Pre-drying temperature | °C | 120 |
| Zone 1-3 temperature | °C | 290 |
| Nozzle temperature | °C | 290 |
| Mold temperature | °C | 82 |
| Screw speed | rpm | 100 |
| Back pressure | bar | 3.4 |
| Injection time | s | 1-2 |
| Approx. cycle time | s | 31-35 |

Chemical resistance was determined according to ASTM D-543. In particular, chemical resistance can be demonstrated by the retention (expressed in %) of tensile strength at yield and tensile elongation at break. Chemical resistance was evaluated on 3.2 mm ASTM tensile bars at 23° C after exposure to a chemical agent. In particular, the ASTM tensile bars are bent to specific strain levels (e.g., 0.5 % or 1% in a test fixture) and the bars are kept in constant exposure to the strain and chemical agent for a specified test period. Bars may be wrapped so that they are kept saturated while in contact with the strained area. After a predetermined amount of time, the retention (expressed in %) of tensile stress at yield and tensile elongation at break are measured. The retention of the tensile strength at yield (σ_{y}) and tensile elongation at break (ε_{b}) were calculated compared to a control sample (no chemical exposure) using the criteria shown in Table 4:

**Table 4 - ESCR Rating Criteria**

| **Compatibility Criteria** | **Tensile Strength at Yield Retention, σ_{y} (%)** | **Tensile Elongation at Break Retention, (ε_{b}) (%)** | **Inference** |
|---|---|---|---|
| Compatible | ≥ 90 | 80-139 | Property retained |
| Marginal | 80-89 | 65-79 | Onset of possible failure |
| Not Compatible | ≤ 79 | < 65 | Craze/crack observed |
| | | ≥ 139 (plasticization) | Specimen softened |

Various properties of the compositions were evaluated as shown in Table 5:

**Table 5 - Properties, Standards and Conditions**

| **Property** | **Test Standard** | **Test Conditions** | **Specimen** |
|---|---|---|---|
| Melt Volume Rate (MVR) | ASTM D1238 | 300 °C, 1.2 kg, 360 s | Pellets |
| Vicat Softening Temperature (Vicat) | ASTM D1525 | 50 N. 50 °C/h | 3.2 mm bar |
| Tensile (tensile modulus (TM), σ_{y}, and ε_{b}) | ASTM D638 | 50 mm/min, 23 °C | 3.2 mm bar |
| Notched Izod Impact strength (NII) | ASTM D256 | 5.5 J. 23 °C and 0 °C | 3.2 mm bar |
| Haze and Transmittance (transparency) | ASTM D1003 | 2.5 mm | 2.5 mm plaque |
| ESCR sunscreen (σ_{y} and ε_{b} retention) | ASTM D543 | 1 % strain, 23 °C, 3 days | 3.2 mm bar |

Example and Comparative Compositions were prepared according to Table 6A:

**Table 6A - Comparative and Example Compositions**

| **Component** | **C1.1** | **C1.2** | **C1.3** | **C1.4** | **C2.1** | **C2.2** | **C2.3** | **C2.4** | **E1.1** | **E1.2** |
|---|---|---|---|---|---|---|---|---|---|---|
| PC-1 | | | 52.62 | 10 | | | | | | |
| PC-2 | 99.62 | | 35 | 54.62 | 24.62 | | | | | |
| PC-3 | | 99.62 | | | 40 | 84.62 | 97.42 | 97.32 | 84.32 | 96.32 |
| B-PC | | | | 20 | 20 | | | | | |
| PC-Si-1 | | | | 13 | 13 | 13 | | | 13 | |
| PC-Si-2 | | | 12 | 2 | 2 | 2 | 2 | 2 | 2 | 3 |
| STAB | 0.08 | 0.08 | 0.08 | 0.08 | 0.08 | 0.08 | 0.08 | 0.08 | 0.08 | 0.08 |
| PETS | 0.3 | 0.3 | 0.3 | 0.3 | 0.3 | 0.3 | 0.5 | 0.3 | 0.3 | 0.3 |
| PAO | | | | | | | | 0.3 | 0.3 | 0.3 |
| **Total (wt%)** | 100 | 100 | 100 | 100 | 100 | 100 | 100 | 100 | 100 | 100 |

Properties of the Table 6A compositions are provided in Table 6B:

**Table 6B - Properties of Table 6A Compositions**

| **Properties** | **Unit** | **C1.1** | **C1.2** | **C1.3** | **C1.4** | **C2.1** | **C2.2** | **C2.3** | **C2.4** | **E1.1** | **E1.2** |
|---|---|---|---|---|---|---|---|---|---|---|---|
| MVR | cm³/ 10min | 6.8 | 3.1 | 9.5 | 5.5 | 3.4 | 2.7 | 2.5 | 2.6 | 2.8 | 2.6 |
| Vicat | °C | 147 | 148 | 143 | 144 | 146 | 147 | 148 | 148 | 146 | 147 |
| TM | MPa | 2190 | 2140 | 2020 | 2150 | 2120 | 2080 | 2130 | 2130 | 2110 | 2120 |
| Tensile σ_{y} | MPa | 60.4 | 60.3 | 55 | 58.7 | 59.1 | 59.2 | 60.3 | 60.2 | 59.4 | 59.5 |
| Tensile ε_{b} | % | 136 | 138 | 120 | 146 | 135 | 135 | 132 | 134 | 121 | 136 |
| NII, 23°C | J/m | 899 | 939 | 875 | 891 | 925 | 961 | 930 | 910 | 944 | 920 |
| NII, -30°C | J/m | 584 | 896 | 777 | 817 | 814 | 836 | 810 | 810 | 851 | 780 |
| Haze | % | 1 | 1 | Opq | 9 | 15 | 19 | 36 | 44 | 23 | 70 |
| Transmittance | % | 92 | 91 | Opq | 78 | 74 | 71 | 63 | 60 | 69 | 50 |
| ESCR Banana Boat | σ_{y}, % | 0 | 19 | 0 | 0 | 0 | 80 | 60 | 80 | 101 | 100 |
| | ε_{b}, % | 0 | 11 | 0 | 0 | 0 | 49 | 44 | 55 | 101 | 92 |

| | | | | | | | | | | | |
|---|---|---|---|---|---|---|---|---|---|---|---|
| Opq = opaque 0% strength/yield retention = test bar broke and could not be tested | | | | | | | | | | | |

From the results it is observed that the comparative examples shown in Table 6A have a good balance of processability and physical properties, but are not chemically resistant to Banana Boat sunscreen spray, which is harsher on these polymers than sunscreen lotion. The 0% retention results mean that the test parts broke during the 3 days of exposure at room temperature in a 1.0% strain jig after Banana Boat sunscreen spray was applied.

As shown in the data, a high loading of a high molecular weight PC (e.g., PC-3) resulted in excellent chemical resistance. Note that it is believed that branched polycarbonate (e.g., B-PC above)-which is also a higher molecular weight PC-could be substituted for some of this higher molecular weight PC and still provide suitable chemical resistance properties. Without a high enough loading of this high molecular weight PC, comparative composition C1.3 which included a high content of PC-Si copolymer (40 wt% siloxane) and comparative composition C2.1 which included a high content of PC-Si copolymer (6 wt% siloxane) both had sample failures after chemical exposure. It is also noted that comparative composition C1.2-which included the high molecular weight PC (PC-3) but no PC-Si copolymer-also failed the ESCR testing (not compatible).

From the example compositions it is observed that a minimum content of a high siloxane content PC-Si copolymer (e.g., 40 wt% siloxane) may be added to a higher loading of a higher molecular weight polycarbonate (e.g., PC-3) to provide compatible ESCR performance and maintain good transparency and haze properties. If this PC-Si copolymer content is too high, however, the composition may not achieve desired transparency and haze properties-see comparative composition C1.3 which included 12 wt% PC-Si copolymer (40 wt% siloxane).

However, this higher siloxane content PC-Si copolymer-on its own-is not sufficient to provide compatible ESCR performance. See comparative compositions C2.3 and C2.4. When a lower siloxane content PC-Si copolymer (PC-Si-1 having a 6 wt% siloxane content) was added, the total siloxane content was increased and chemical resistance improved as shown in example composition E1.1. Additionally, the transmittance/ transparency of the E1.1 is higher than that of example composition E1.2 which included only 3 wt% of the higher siloxane content PC-Si copolymer PC-Si-2.

Finally, it was observed that adding a combination of two mold release agents (e.g., PETS and PAO) resulted in compositions having substantially improved chemical resistance as compared to compositions including only PETS. Compare, e.g., example composition E1.1 to comparative composition C2.2. This synergy in ESCR performance resulting from a combination of two mold release agents was surprising.

From the examples presented herein it was observed that increasing the amount of high molecular weight PC provides improved chemical resistance to the polycarbonate-based compositions. By combining this higher molecular weight PC with a high siloxane content PC-Si copolymer (e.g., PC-Si-2 having a 40 wt% siloxane content) and a combination of two mold release agents, an unexpected improvement of properties including balanced transparency/haze and chemical resistance was observed. A lower siloxane content PC-Si copolymer may be substituted for some of the higher siloxane content PC-Si copolymer to maintain chemical resistance and improve transparency and haze properties.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:
a) from about 80 wt% to about 97 wt% of a polycarbonate homopolymer having a molecular weight of at least 31,500 as determined by gel permeation chromatography relative to linear bisphenol A polycarbonate standards;
b) from about 1 wt% to about 15 wt% of a first polycarbonate-siloxane copolymer having a siloxane content of from 35 wt% to 45 wt%; and
c) from about 0.2 wt% to about 2 wt% of a mold release component comprising at least two distinct mold release agents,
wherein the combined weight percent value of all components does not exceed 100 wt%, and all weight percent values are based on the total weight of the composition.

2. The thermoplastic composition according to claim 1, wherein the polycarbonate homopolymer comprises a linear polycarbonate homopolymer, a branched polycarbonate homopolymer, or a combination thereof.

3. The thermoplastic composition according to claim 2, wherein the polycarbonate homopolymer comprises a linear polycarbonate homopolymer having a molecular weight of from 35,000 to 38,000 as determined by gel permeation chromatography relative to linear bisphenol A polycarbonate standards.

4. The thermoplastic composition according to claim 2 or 3, wherein the polycarbonate homopolymer comprises a branched polycarbonate homopolymer having a molecular weight of from 33,000 to 35,000 as determined by gel permeation chromatography relative to linear bisphenol A polycarbonate standards, wherein the branched polycarbonate homopolymer comprises a 1,1,1-tris(4-hydroxyphenyl)ethane (THPE) branching agent.

5. The thermoplastic composition according to any one of claims 1 to 4, wherein the composition comprises at least two distinct polycarbonate homopolymers having a molecular weight of at least 31,500 as determined by gel permeation chromatography relative to linear bisphenol A polycarbonate standards.

6. The thermoplastic composition according to any one of claims 1 to 5, wherein the composition further comprises from about 10 wt% to about 15 wt% of a second polycarbonate-siloxane copolymer having a siloxane content of from about 4 wt% to about 8 wt%.

7. The thermoplastic composition according to any one of claims 1 to 6, wherein the at least two mold release agents comprise a fatty acid ester and a hydrogenated polydene.

8. The thermoplastic composition according to any one of claims 1 to 7, wherein the at least two mold release agents are selected from the group consisting of: pentaerithritol tetrastearate; glycerol monostearate; glycerol tristearate; poly(alfa) olefin; poly(ethylene oxide-propylene oxide-ethylene oxide); and combinations thereof.

9. The thermoplastic composition according to claim 8, wherein the at least two mold release agents comprise at least pentaerithritol tetrastearate and poly(alfa) olefin.

10. The thermoplastic composition according to any one of claims 1 to 9, wherein the at least two mold release agents comprise a first mold release agent and a second mold release agent, and the first mold release agent and the second mold release agent are present in a weight percent ratio of from 1:10 to 10:1.

11. The thermoplastic composition according to any one of claims 1 to 10, wherein the composition comprises at least one additional additive comprising an acid scavenger, an anti-drip agent, an antioxidant, an antistatic agent, a chain extender, a colorant, a flow promoter, a lubricant, a plasticizer, a quenching agent, a flame retardant, a UV reflecting additive, an impact modifier, a blowing agent, a reinforcing agent, or a combination thereof.

12. The thermoplastic composition according to any one of claims 1 to 11, wherein the composition has a compatible Environmental Stress Cracking Resistance (ESCR) rating as evaluated in accordance with ASTM D543, wherein the ESCR rating is evaluated in accordance with ASTM D543 using sunscreen at a temperature of 23 °C for 3 days under a 1% strain.

13. The thermoplastic composition according to any one of claims 1 to 12, wherein the composition has a tensile strength at yield (σ_{y}) retention or a tensile elongation at break (ε_{b}) retention of greater than 80%, as evaluated in accordance with ASTM D543.

14. The thermoplastic composition according to any one of claims 1 to 13, wherein the composition has a transmittance of greater than 60% or a haze of less than 40%, wherein transmittance and haze are evaluated in accordance with ASTM D1003 using a sample having a thickness of 2.5 millimeters (mm).

15. An article comprising the thermoplastic composition according to any one of claims 1 to 14, wherein the article is a component of a medical device, a consumer electronics component, or an automotive component.
